Europäisches Patentamt

European Patent Office

Office européen des brevets

(19)

(11) Veröffentlichungsnummer: **0 070 915**
A1

(12) ## EUROPÄISCHE PATENTANMELDUNG

(21) Anmeldenummer: 81106616.6

(22) Anmeldetag: 26.08.81

(51) Int. Cl.³: **B 01 F 5/06**
F 28 F 25/08, B 01 D 53/18
B 01 D 53/20, B 01 D 3/24

(30) Priorität: 30.07.81 CH 4925/81

(43) Veröffentlichungstag der Anmeldung:
09.02.83 Patentblatt 83/6

(84) Benannte Vertragsstaaten:
AT BE CH DE FR GB IT LI LU NL SE

(71) Anmelder: GEBRÜDER SULZER
AKTIENGESELLSCHAFT
Zürcherstrasse 9
CH-8401 Winterthur(CH)

(72) Erfinder: Streiff, Felix
Jonas Furrer-Strasse 42
CH-8400 Winterthur(CH)

(74) Vertreter: Dipl.-Ing. H. Marsch Dipl.-Ing. K. Sparing
Dipl.-Phys.Dr. W.H. Röhl Patentanwälte
Rethelstrasse 123
D-4000 Düsseldorf(DE)

(54) **Einbauelement für eine Vorrichtung für Stoff- und direkten Wärmeaustausch und Mischen.**

(57) Das Einbauelement für eine Vorrichtung für Mischen und Austauschvorgänge besteht aus mindestens zwei zickzackförmigen Lagen (1). Jede Lage weist eine Anzahl von zusammenhängenden Reihen (2) von sich mit Lücken (3) abwechselnden Leitflächen (4) von im wesentlichen recheckigem Querschnitt auf. Bei der zickzackförmig verformten Lage (1) liegen Verbindungsbrücken (5) in den Tälern und Spitzen der Zacken und die Leitflächen (4) bilden die Flankenebenen. Beim Zusammenbau des Einbauelementes werden die Lagen (1) derart übereinander angeordnet, dass sich kreuzende Strömungskanäle (6) entstehen.

Das Einbauelement kann durch einfache Stanz- und Biegevorgänge kostengünstig hergestellt werden.

Fig.5

EP 0 070 915 A1

P.5641/Sd/Wh

Gebrüder Sulzer Aktiengesellschaft, Winterthur/Schweiz

Einbauelement für eine Vorrichtung für Stoff- und direkten
Wärmeaustausch und Mischen

Die Erfindung betrifft ein Einbauelement für eine Vorrichtung für Stoff- und direkten Wärmeaustausch und Mischen gemäss dem Oberbegriff des Patentanspruches 1.

Einbauelemente dieser Art haben bisher in statischen Mischern Verwendung gefunden (vergl. beispielsweise die DE-AS
23 28 795 und die DE-AS 25 22 106).

Die Aufgabe der bekannten Einbauelemente besteht hierbei
darin, zwei oder mehrere im Gleichstrom fliessende Stoffe
homogen zu mischen, d. h. bei jedem Mengen- und Zähigkeitsverhältnis der zu mischenden Komponenten eine hochwertige
Mischgüte des Endproduktes über den gesamten Strömungsquerschnitt zu erreichen.

Bei Anwendung der bekannten Einbauelemente als Packungskörper für Stoffaustauschverfahren, insbesondere Rektifizierverfahren, werden die Packungskörper im Gegenstrom von den in
Stoffaustausch gebrachten Phasen durchsetzt, wobei die Leitflächen als Trägerflächen für die als Film unter dem Einfluss der Schwerkraft herabrieselnde flüssige Phase dienen, mit der die die Lücken des Packungskörpers im Gegenstrom zu dieser flüssigen Phase ausfüllende Gasphase bei Anwendung auf Gas-Flüssigkeitsaustauschverfahren oder eine zweite flüssige Phase bei Anwendung auf Extraktionskolonnen in Flächenkontakt gebracht wird.

Die bisher üblichen Herstellungsverfahren für die im Oberbegriff des Patentanspruches definierten Einbauelemente sind äusserst aufwendig, insbesondere im Hinblick auf das breite Spektrum der verschiedenen gewünschten Durchmesser.

So erfordern die Einbauelemente, wie sie aus der DE-AS 23 28 795 und der DE-AS 25 22 106 bekannt sind, und die im ersten Fall aus kreuzweise zusammengesteckten kammartigen Platten und im zweiten Fall aus zusammengefügten Einzelelementen in Art von "spanischen Reitern" bestehen, für jeden Durchmesser spezielle Stanzwerkzeuge.

Demgegenüber hat sich die Erfindung eine Struktur eines Einbauelementes zur Aufgabe gemacht, welche einfach und kostengünstig für jeden gewünschten Durchmesser hergestellt werden kann.

Diese Aufgabe wird mit Hilfe der im Kennzeichen des Patentanspruches 1 angegebenen Massnahmen gelöst.

Ein vorteilhaftes Herstellungsverfahren für ein erfindungsgemässes Einbauelement kann darin bestehen, dass eine aus einem folienartigen Material zickzackförmige Lage dadurch gebildet wird, dass in dem folienartigen Material Lücken derart gebildet werden, dass ein Gerüst aus Leitflächen und Verbindungsbrücken bestehen bleibt, und dass das Gerüst zickzackförmig zu einer Lage verformt wird, so dass die Verbindungsbrücken in den Tälern und Spitzen der Zacken liegen, und dass mindestens zwei Lagen derart aufeinander gelegt werden, so dass sich kreuzende Strömungskanäle entstehen.

Das Einbauelement kann auch aus mehreren segmentartig nebeneinanderliegenden Paketen von zwei oder mehr übereinanderliegenden Lagen 2 bestehen, wobei die Kontur des Einbauelementes bzw. der einzelnen Lagen dem Innenumfang der Vorrichtung angepasst wird.

Bei Verwendung von Blech als Grundmaterial werden die Lücken zweckmässig ausgestanzt, während bei Verwendung von Kunststoff als Grundmaterial jeweils eine Lage durch Spritzgiessen erzeugt werden kann.

Die Erfindung wird im folgenden anhand eines in der Zeichnung dargestellten Ausführungsbeispiels erläutert.

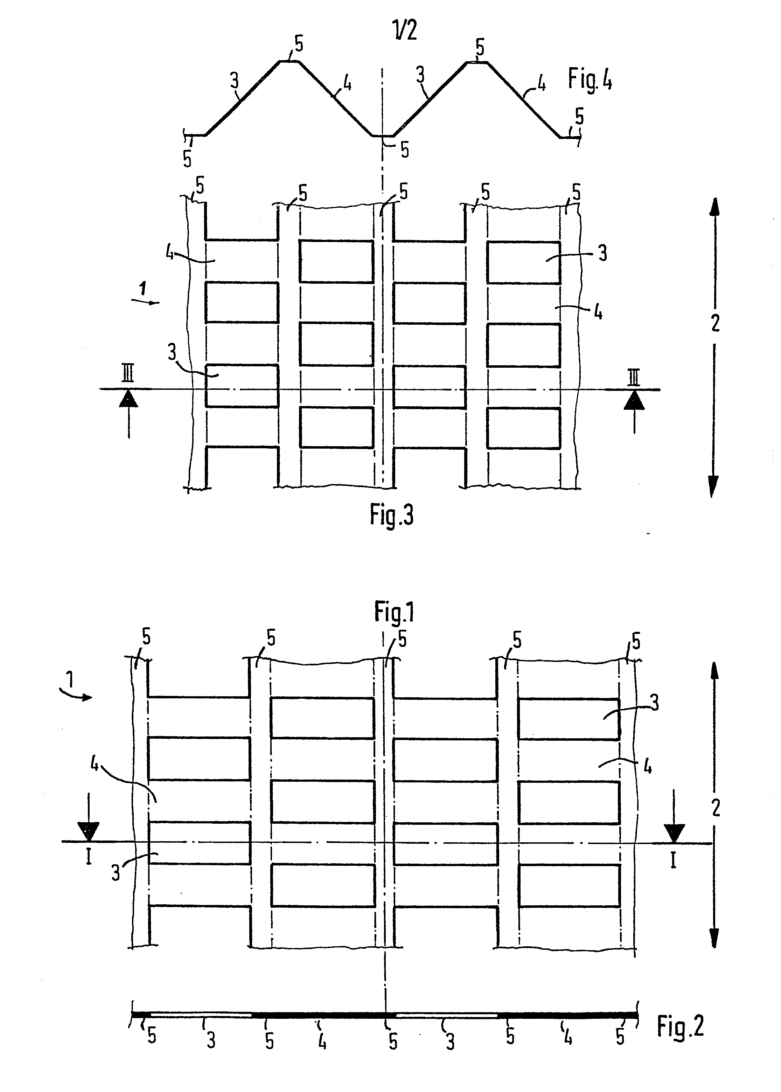

Hierbei zeigt Fig. 1 im Grundriss einen Ausschnitt einer Lage im gestanzten Zustand,

Fig. 2    einen Schnitt längs der Schnittlinie I - I von Fig. 1,

Fig. 3    eine Aufsicht im zickzackförmigen Zustand,

Fig. 4    einen Schnitt längs der Schnittlinie III - III der Fig. 3 hierzu und

Fig. 5    in perspektivischer Darstellung einen Ausschnitt eines Einbauelementes mit vier Lagen.

Der in Fig. 1 dargestellte Ausschnitt einer Lage 1 zeigt mehrere zusammenhängende Reihen 2 von sich mit Lücken 3 abwechselnden Leitflächen 4 von rechteckigem Querschnitt.

Selbstverständlich sind auch andere Formen für die Lücken möglich. Beispielsweise können bei den Lücken die Ecken abgeschrägt sein, so dass die verbleibenden Ecken die Verbindungsbrücken zwischen den Leitflächen bilden. Die Leitflächen 4 sind in benachbarten Reihen jeweils um eine Leitflächenbreite gegeneinander versetzt und sind an ihren beiden Enden jeweils durch Verbindungsbrücken 5 miteinander verbunden.

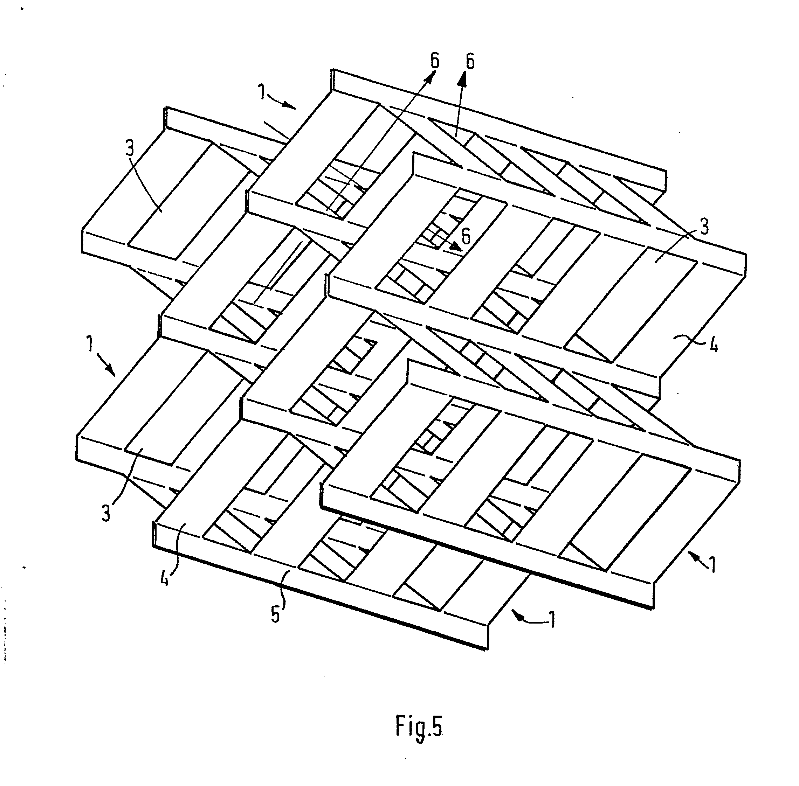

Die Fig. 3 und 4 zeigen einen Ausschnitt der zickzackförmig verformten Lage 1, wobei die Verbindungsbrücken 5 in den Tälern und Spitzen der Zacken liegen.

Der in Fig. 5 perspektivisch dargestellte Ausschnitt eines Einbauelementes weist vier übereinander angeordnete Lagen 1 auf, wobei der Zusammenbau derart erfolgt, dass durchgehende, sich kreuzende Strömungskanäle 6 entstehen.

Benachbarte Lagen werden längs ihrer Verbindungsbrücken beispielsweise zusammengeschweisst.

Im Falle das Grundmaterial ein Kunststoff ist, können die einzelnen Lagen z. B. auch durch Spritzgiessen hergestellt werden.

## Patentansprüche

1. Einbauelement für eine Vorrichtung für Stoff- und direkten Wärmeaustausch und Mischen von mindestens zwei Komponenten, bestehend aus einer Struktur von sich kreuzenden Leitflächen, welche zur Durchflussrichtung der Komponenten geneigt sind, dadurch g e k e n n z e i c h n e t , dass das Einbauelement aus Lagen besteht, wobei jede Lage ein zickzackartiges, zusammenhängendes Gebilde ist und aneinander angrenzende und miteinander durch Verbindungsbrücken verbundene Reihen von Leitflächen aufweist, wobei die Verbindungsbrücken in den Tälern und Spitzen der Zacken liegen, und dass die Flankenebenen der Zacken abwechselnd Leitflächen und Lücken von der Grösse der Leitflächen aufweisen, wobei die Lücken und Leitflächen von benachbarten Flankenebenen gegeneinander um die Breite einer Leitfläche versetzt sind, und dass mindestens zwei Lagen derart übereinander angeordnet sind, dass sich kreuzende Strömungskanäle entstehen.

2. Einbauelement nach Anspruch 1, dadurch gekennzeichnet, dass mindestens zwei Lagen derart übereinander angeordnet sind, dass die Leitflächen der einen Lage in der Verlängerung der Leitflächen der anderen Lage sich befinden, so dass durchgehende sich kreuzende Strömungskanäle entstehen.

3. Einbauelement nach Anspruch 1, dadurch gekennzeichnet, dass mindestens eine Lage so angeordnet ist, dass die Lücken dieser Lage in der Verlängerung der Leitflächen der anderen Lage sich befinden, so dass die sich kreuzenden Strömungskanäle zusätzliche Richtungsänderungen erfahren.

4. Herstellungsverfahren für ein Einbauelement nach Anspruch 1, dadurch gekennzeichnet, dass eine aus einem folienartigen Material bestehende zickzackförmige Lage (1) dadurch gebildet wird,

0070915

dass in dem folienartigen Material Lücken derart gebildet werden, dass ein Gerüst aus Leitflächen und Verbindungsbrücken (5) bestehen bleibt, und dass das Gerüst zickzackförmig zu einer Lage verformt wird, so dass die Verbindungsbrücken in den Tälern und Spitzen der Zacken liegen, und dass mindestens zwei Lagen derart aufeinander gelegt werden, so dass sich kreuzende Strömungskanäle entstehen.

5. Herstellungsverfahren nach Anspruch 4, dadurch gekennzeichnet, dass bei Verwendung von Blech als folienartiges Material die Lücken ausgestanzt werden.

6. Herstellungsverfahren nach Anspruch 4, dadurch gekennzeichnet, dass bei Verwendung von Kunststoff als folienartiges Material eine Lage durch Spritzgiessen erzeugt wird.

Fig.4

Fig.3

Fig.1

Fig.2

0070915

Fig.5

## Europäisches Patentamt

**EUROPÄISCHER RECHERCHENBERICHT**

EP 81 10 6616

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 086 365 (VEB MASCHINEN- UND APPARATEBAU GRIMMA) * Seite 1, Zeile 11; Seite 3, Zeilen 11-13; Seite 4, Zeilen 22,23,32; Seite 5, Zeilen 2,3; Figur 14 * | 1,2 | B 01 F 5/06 F 28 F 25/08 B 01 D 53/18 B 01 D 53/20 B 01 D 3/24 |
| Y | US-A-2 783 982 (KAHL) * Spalte 3, Zeilen 43,44; Figuren 1,4 * | 1,5 | |
| A | DE-C- 666 465 (THE HONORARY ADVISORY COUNCIL FOR SCIENTIFIC AND INDUSTRIAL RESEARCH) * Seite 2, Zeilen 41-43; Ansprüche 1,2; Figur 3 * | 1 | |
| A | DE-A-1 501 375 (ESCHER WYSS) * Figur 6 * | 1,3 | RECHERCHIERTE SACHGEBIETE (Int. Cl. ³) |
| A | DE-C- 385 546 (SCHMIDT) * Einziger Anspruch; Figuren 1,2 * | 1 | B 01 F F 28 F B 01 D |
| A | FR-A-2 203 671 (REGEHR) * Seite 2, Zeilen 13-17; Figur 1 * | 1,4,6 | |

Der vorliegende Recherchenbericht wurde für alle Patentansprüche erstellt.

| Recherchenort | Abschlußdatum der Recherche | Prüfer |
|---|---|---|
| DEN HAAG | 02-11-1982 | AST W.O. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82